# EUROPEAN PATENT SPECIFICATION

(11) **EP 0 593 288 B1**
(45) Date of publication and mention of the grant of the patent: **20.12.1995**
(21) Application number: 93308181.2
(22) Date of filing: 13.10.1993
(51) Int. Cl.: B60C 11/04

(54) **Pneumatic tyre**
Luftreifen
Bandage pneumatique

(30) Priority: 14.10.1992 JP 302955/92; 28.07.1993 JP 207197/93; 05.08.1993 JP 215015/93
(43) Date of publication of application: 20.04.1994
(73) Proprietor: SUMITOMO RUBBER INDUSTRIES LIMITED, Kobe-shi Hyogo-ken (JP)
(72) Inventor: Tanaka, Masatoshi, Takarazuka-shi, Hyogo-ken (JP); Takatsu, Sumio, Toshima-ku, Tokyo-to (JP)
(74) Representative: Stewart, Charles Geoffrey

(56) References cited:
- EP-A- 0 435 620
- DE-A- 3 525 394
- FR-A- 634 594
- US-A- 4 044 810
- PATENT ABSTRACTS OF JAPAN vol. 016, no. 041 (M-1206)31 January 1992 & JP-A-03 246 104 (BRIDGESTONE CORP.) 1 November 1991
- PATENT ABSTRACTS OF JAPAN vol. 016, no. 299 (M-1274)2 July 1992 & JP-A-04 081 305 (BRIDGESTONE CORP.) 16 March 1992

## Description

The present invention relates to a pneumatic tyre, particularly a low aspect radial tyre for passenger vehicles, capable of providing higher wet grip performance and reduction of tyre noise and maintaining dry grip performance.

Recently, as automobiles become quieter tyre noise has come to contribute at a higher ratio to the total noise level of an automobile, and its reduction is demanded. Such noise reduction is specifically desired in a range around 1 kHz which is easily heard by a human ear, and sounds due to a columnar resonance is one of the main sound sources in such high frequency range.

On the other hand, in order to maintain the wet grip performance, the tread of tyre is generally provided with plural circumferential grooves continuously extending in the circumferential direction of tyre.

In such a tyre, when it is in contact with the ground, a kind of air column is formed by the road surface and the circumferential groove. Then a sound of a specific wavelength, which is double the wave length of the air column is caused by airflow within the column during running.

Such a phenomenon is referred to as columnar resonance, and provides the main source of noise at 800 Hz to 1.2 kHz. The wavelength of the columnar resonance sound is approximately constant to give a constant frequency regardless of the tyre's speed, and then increases sound inside and outside an automobile.

In order to prevent the columnar resonance, although reduction of the number or volume of the circumferential grooves is known, such reductions lead to a lower wet grip performance.

On the other hand, although the wet grip performance can be increased contrarily by increasing the number or volume of circumferential grooves, a simple increase causes reduction of the dry grip performance, because the ground-contacting area is reduced. Also this causes a reduction of steering stability as the rigidity of the tread pattern is reduced, in addition to the increase in tyre noise.

Conventionally, tyre's performances have been adjusted by sacrificing one or more performance factors. A known tyre which comprises the features of the preamble of claim 1 is shown, e.g. by US-A-4 044 810.

It is hence a primary object of the invention to provide a pneumatic tyre having improved wet grip performance without loss of dry grip performance or steering stability, and yet having reduced noise.

According to the present invention, a pneumatic tyre comprises a tread part having two circumferential grooves continuously extending in the circumferential direction in either side of the tyre's equator so as to divide the tread part into a pair of shoulder parts, which are located outside outer bottom edges of the circumferential grooves in the axial direction of tyre, and a central part, which is located between inner bottom edges of the circumferential grooves in the axial direction of tyre characterised in that the central part has a surface comprising successive convex curves composed of a pair of inner groove walls extending inside, in the axial direction of tyre, along a curve convex outwardly in the radial direction from the inner bottom edges of the circumferential grooves and a central ground-contacting surface smoothly connected between the pair of the inner groove walls, and the central ground-contacting surface is substantially in contact with a virtual tread line between outer surfaces of the shoulder parts.

The tread rubber of the tread part may be composed of a first rubber composition having a loss tangent (tan δ1) in the range 0.01 to 0.35 and a second rubber composition having a loss tangent (tan δ2) in the range of 1.2 to 10 times the loss tangent (tan δ1) of the first rubber composition. The first rubber composition is provided at least in a radially inner region of the central part so as to be adjacent to a belt layer. The second rubber composition is provided at least in a radially outer region of at least one shoulder part so as to be adjacent to a tread surface.

The central ground-contacting surface may be provided with a circumferential radiation groove continuously extending along the tyre's equator and having a groove depth D1 of 0.4 to 0.9 times the groove depth D of the circumferential groove and a groove width W1 of 5 mm or less.

Further aspects of the invention will be apparent from the following description of an embodiment, by way of example, referring to the attached diagrammatic drawings, in which:
Fig. 1 is a sectional view showing an embodiment of the invention.
Fig. 2(A) is an enlarged partial sectional view showing a belt layer.
Fig. 2(B) is a sectional view showing an another example of a belt layer.
Fig. 3 is a partial flat view showing a tread pattern.
Fig. 4 is a partial plan view of a tread pattern showing another example of a circumferential groove.
Fig. 5 is a sectional view of a tyre showing another example of a central part configuration.
Fig. 6 is a sectional view of a tyre showing still other example of a central part configuration.
Fig. 7 is a diagram showing a result of a noise test.
Fig. 8 is a diagram showing a result of a noise test.
Fig. 9 is a diagram showing the relation between the total groove width ratio and cornering power.
Fig. 10 is a graph showing the relation between the total groove width ratio and hydroplaning-inducing speed.
Fig. 11 is a plan view showing a typical foot print of an embodiment of the invention.
Fig. 12(A) is an enlarged partial sectional view for explanation of groove bottom ends.
Fig. 12(B) is an enlarged partial sectional view for explanation of groove bottom ends.
Fig. 13 is a sectional view showing the arrangement of the tread rubber structure.
Fig. 14 is a sectional view showing another tread rubber structure.
Fig. 15 is a sectional view showing another tread rubber structure.
Fig. 16 is a sectional view showing a further tread rubber structure.
Fig. 17 is a sectional view showing another tread rubber structure.
Fig. 18 is a sectional view showing another tread rubber structure.
Fig. 19 is a diagram showing the relation between the loss tangent ratio tan δ2/tan δ1 and high-speed durability.
Fig. 20 is a diagram showing the tread profile of a conventional tyre.
Fig. 21 is a sectional view showing the tread rubber structure of the conventional tyre 1 in table 1.
Fig. 22 is a sectional view showing the tread rubber structure of comparison tyres 1, 2, 3 and 4 in table 1.
Fig. 23 is a sectional view showing the tread rubber structure of tyres 5, 6 and 7 of the invention in table 1.
Fig. 24 is a sectional view showing radiation grooves.
Fig. 25 is a partial flat view of the grooves of Fig. 24.
Fig. 26 is a graph showing the relationship between the hydroplaning-inducing speed and the opening of the lateral radiation grooves.
Fig. 27 is a flat view showing another example of radiation grooves.
Fig. 28 is a flat view showing still another example of radiation grooves.
Fig. 29 is a flat view showing yet another example of radiation grooves.
Fig. 30(A) is a flat view showing another example of radiation grooves.
Fig. 30(B) is a flat view showing still another example of radiation grooves.
Fig. 31 is a diagram showing the result of a noise test.

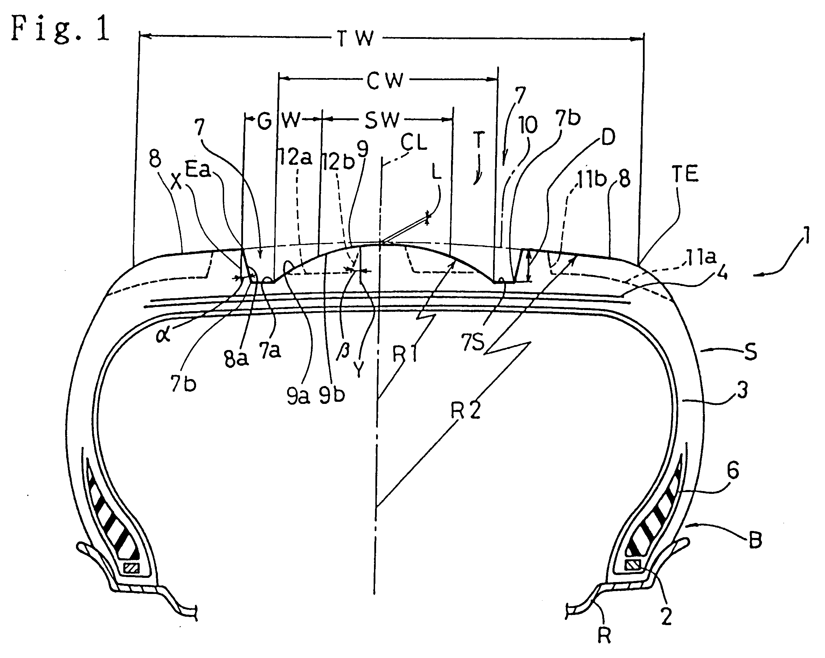

Fig. 1 shows a tyre 1 of the invention in its normal state mounted on its standard rim R and inflated to the standard internal pressure as specified by the JATMA standard.

The tyre 1 comprises a pair of bead parts B each having a bead core 2, sidewall parts S extending from the bead parts B outwardly in the radial direction of the tyre, and a tread part T linking their outer ends. The aspect ratio is between 0.4 and 0.6 to provide low aspect radial tyre for passenger vehicles. ( $\text{Aspect ratio = sectional height ÷ tyre width}$ ).

A radial carcass 3 extends between the bead parts B. The edges of the carcass 3 are folded back from inside to outside one around the bead core 2, and a belt layer 4 is provided above the carcass 3 and radially inwards of the tread part T.

In addition, a rubber bead apex 6 extending radially outwards from each bead core 2 is provided between the main part of the carcass 3 and the folded back part thereof so as to maintain the shape and rigidity of the bead part B.

The belt layer 4 comprises plural belt plies 4A of cords coated in a topping rubber. The cords have a high tensile strength, such as steel or aromatic polyamide, and are aligned in each ply parallel to each other.

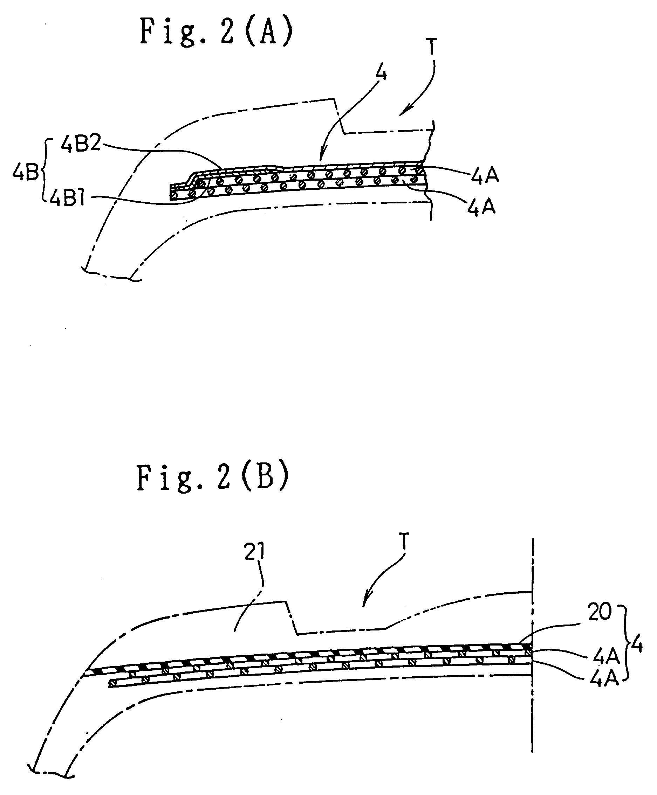

In the embodiment, the belt layer 4 includes, as shown in Fig. 2(A), a bandage ply 4B placed outside a belt ply 4A for controlling lifting of the belt ply 4A associated with high-speed driving.

In each belt ply 4A, the cords are aligned at a relatively small angle of 15 to 30 degrees to the tyre's equator so as to be crossed by each other between the plies.

The bandage ply 4B comprises an edge band 4B1 covering the belt ply 4A in an outer edge part thereof, and a full bandage 4B2 placed outside the edge bandages and covering the belt ply together with the edge bandages 4B1. The bandages 4B1, 4B2 are formed by spirally winding nylon bandage cords, for example, at an angle of 5 degrees or less to the tyre's equator.

A coating rubber layer 20 may be formed outside the belt plies 4A or the bandage ply 4B as shown in Fig. 2(B). The coating rubber layer 20 is a thin rubber layer covering an outer surface of outer belt layer 4 so as to increase adhesion between a tread rubber 21 and the belt layer 4. For the coating rubber layer 20, a rubber composition approximately the same as that of the topping rubber is employed. It may be formed over the entire width of the tread, as shown in the Fig. 2(B), or for the same width as that of the outer belt ply. For the carcass cords, in the case of a tyre for passenger vehicles, such organic fibre cords as nylon, rayon and polyester may be generally employed.

The tread part has two wide circumferential grooves 7, which are positioned one at either side of the tyre's equator CL and then continuously extend substantially in the circumferential direction, so that the tread part T is divided into a pair of shoulder parts 8 and a central part 9. The shoulder part 8 is defined as the area outside an outer bottom edge 7b of the circumferential groove 7 in the axial direction of tyre. The central part 9 is defined as the area between the inner bottom edges 7a of the circumferential grooves 7 in the axial direction of tyre. Preferably, the circumferential grooves 7 are positioned symmetrically about the tyre's equatorial surface. More preferably, the centre of the bottom 7S of the groove 7 is located approximately in the middle of tyre's equatorial surface and ground-contacting tread edge TE. The groove depth D of the groove 7 is 4 to 8% of the ground-contacting width TW of the tread such as 7.5 to 15.0 mm, preferably 8.4 mm for a tyre of 205/55R15 in size.

The central part 9 has a surface with a smooth convex curve composed of a pair of inner groove walls 9a extending inwards in the axial direction of tyre along a curve convexed outwardly in the radial direction of tyre from the inner bottom edges 7a of the grooves 7 and a central ground-contacting surface 9b smoothly connected between the inner groove walls 9a.

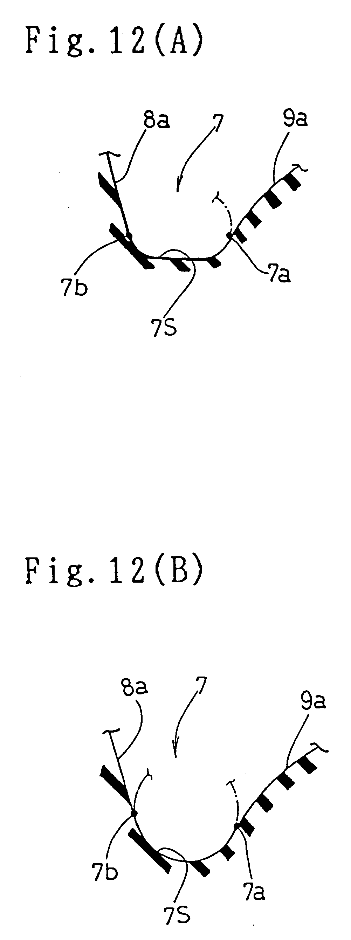

The central ground-contacting surface 9b is defined as the tread surface area of the central part 9 which comes in contact with the ground when a standard load specified by JATMA standard is applied to the tyre in the standard state. The ground-contacting tread edge TE is the outer edge of the ground-contacting surface of the shoulder part 8, when the standard load is applied. The ground-contacting surface of the shoulder part 8 is crossed by an outer groove wall 8a extending outside in the radial direction from the outer bottom edge 7b of the groove 7. Thus, the circumferential groove 7 is defined by the groove bottom 7S and inner and outer groove walls 9a, 8a. The groove width GW of the circumferential groove 7 is defined as the distance in the axial direction of tyre from an inner edge Ea of the ground-contacting surface of the shoulder part 8 to the upper end of the inner groove wall 9a. The groove bottom edges 7a, 7b may be formed, when the groove bottom 7S is approximately a flat surface as in the embodiment, as bending points between the groove bottom 7S and groove walls 8a, 8b. When the groove bottom 7S is a concave surface as shown in Figs. 12(A) and (B), the groove bottom edges 7a, 7b may be formed as bending points or inflection points.

The central ground-contacting surface 9b is substantially in contacting with a virtual tread line 10 connected between the ground-contacting surfaces of the shoulder parts 8 by extending the ground-contacting surfaces of the shoulder parts 8.

Here, the expression "substantially in contact" means that a distance L between the central ground-contacting surface 9b and the virtual tread line 10 is within 2% of the ground-contacting tread width TW in the tyre's equator CL. If it is 2% or more, because the difference between the ground-contacting pressures of the shoulder part and central part is increased, the grip performance is reduced, and the wear resistance is affected. Thus, it should be preferably 1% or less, more preferably 0.5% or less.

Additionally, the virtual tread line 10 is defined as the arcuate curve of a single radius of curvature which extends between the inner edges Ea of the ground-contacting surfaces of the shoulder part 8 and is in contact with tangent lines to the ground-contacting surfaces of the shoulder part 8 at the inner edges Ea thereof. When the tangent is approximately parallel, the virtual tread line 10 is formed as a straight line connecting between the inner edges Ea, Ea.

In the invention, the convex central part 9 provides a sub-tread having a radius of curvature which is comparatively small and a width sufficiently narrower than the tyre's width in the centre of the tyre, thus, the hydroplaning phenomenon is prevented, and the wet grip performance is increased.

By reducing the radius of curvature of the central part 9, specifically that of the central ground-contacting surface 9a, the water draining performance to the outside in both directions is increased, and the water clearing effect on a wet road is enhanced.

Incidentally, in the case where the radius of curvature R2 of the ground-contacting surface of the shoulder part 8 is also reduced, the grip performance on a dry road and steering stability in cornering are reduced due to reduction of the ground-contacting area. Therefore, the radius of curvature R2 of the ground-contacting surface of shoulder part 8 should be comparatively large, preferably 3 or more time the ground-contacting width TW. It is also allowable for the ground-contacting surface of the shoulder part 8 to be approximately a straight line parallel with the tyre's axis.

Fig. 1 shows an example with the surface of the central part 9 formed by an arc with a radius of curvature R1. The radius of curvature R1 is sufficiently smaller than the radius of curvature R2 of the shoulder part 8, and the convex curve of the central part 9 is inscribed with the virtual tread line 10 in the example. In Fig. 1, the distance L is drawn on purpose to explain the phrase "substantially in contact".

It is also preferable that the radius of curvature R1 is set within a range of 0.5 to 1.5 times the ground-contacting tread width TW. If it is less than 0.5 times, the width SW of the central ground-contacting surface 9b is reduced, and the dry grip performance tends to be significantly reduced. If it is more than 1.5 times, the draining effect is insufficient, and the wet grip performance is inferior. Additionally, both radii of curvature R1, R2 should have their centres on the tyre's equatorial surface. In the embodiment, the shoulder part 8 is provided with an arcuate part with a radius of curvature smaller than the radius of curvature R2 in the vicinity of the ground-contacting edge TE.

In order to maintain the performance factors such as dry grip performance, wear resistance and steering stability, the width SW of the central ground-contacting surface 9b is about 5 to 40%, more preferably 15 to 35% of the ground-contacting tread width TW. In addition, it is preferable that the width CW of the central part 9, that is the distance between the inner groove bottom edges 7a is about 40 to 55% of the ground-contacting tread width TW.

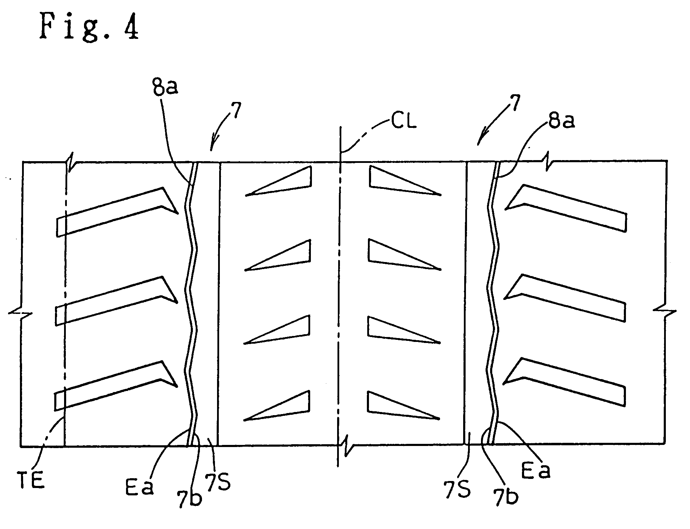

Furthermore, in the shoulder part 8, it is desirable that the outer groove wall 8a of the groove 7 is formed by a relatively steep and non-arcuate line such as a straight line, at an angle α of 0 to 40 degrees, preferably 5 to 25 degrees to a radial line X of tyre, so that an edge effect on the road surface is provided at the inner edge Ea of the shoulder part 8 with a high ground-contacting pressure to help maintain the dry grip performance by increasing lateral force, and thereby cornering power. The outer groove wall 8a may be formed as a convex curve similar to the inner groove wall 9a, or extended in a zigzag, as shown in Fig. 4, to increase traction.

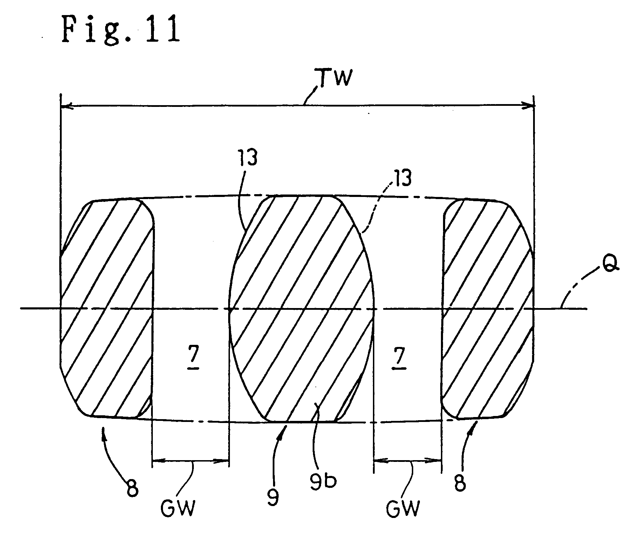

Additionally, to reduce noise due to the air column effect, the groove width GW of the circumferential grooves 7 is 15% or more of the ground-contacting tread width TW, when the tyre is in contact with the ground with the standard load applied, as shown in Fig. 11.

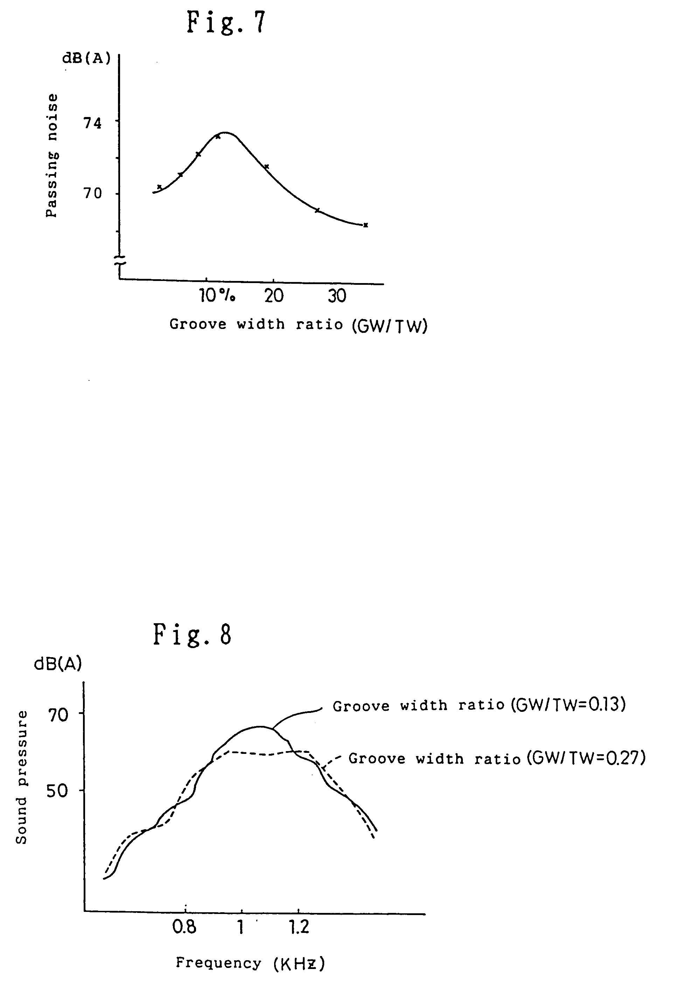

The noise was checked by testing a 205/55 R15 tyre with two U-shaped circumferential grooves in the tread surfaces. For the test the tyre was mounted on a domestic passenger vehicle of 2000 cc in cubic capacity, and the passage noise at a speed of 60 km/h was measured according to the JASO standard (a microphone positioned at 7.5 m). As recognised from Fig. 7, the passage noise increased, as the groove width ratio increased to reach a maximum level at a ratio of 13%, and rapidly reduced thereafter. This proved the groove ratio should be 15% or more, more preferably 20% or more.

Fig. 8 shows the result of a frequency analysis for tyres with groove ratios GW/TW of 13% and 27%. It was found that noises of frequency about 1 kHz are reduced with the ratio of 27%.

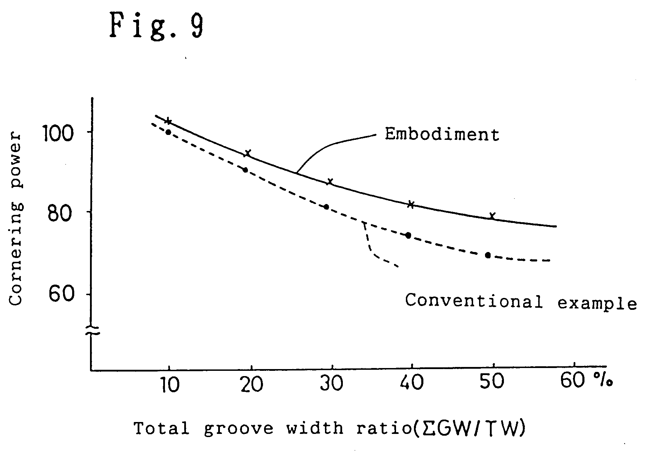

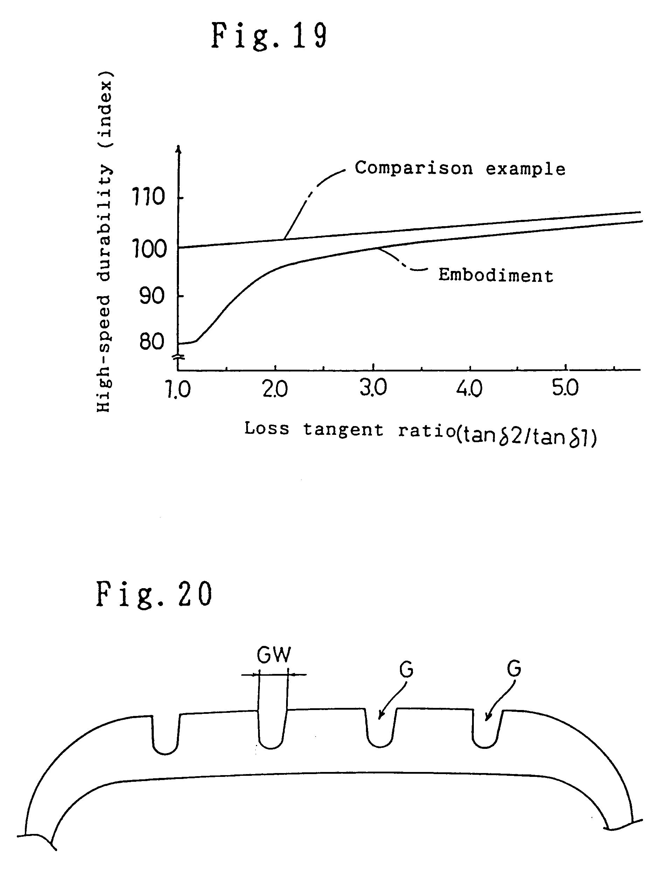

Regarding the circumferential groove 7, it was found that a total groove width ratio 2GW/TW of a total groove width 2GW of the circumferential grooves 7 to the ground-contacting tread width TW affects the cornering power and wet grip performance. Fig. 9 shows the result of measuring the cornering power of a tyre of the same size as the example above with a central part in a form of a single arc as shown in Fig. 1 and a conventional tyre with four circumferential grooves G as shown in Fig. 20 by changing the a total groove width ratio ΣGW/TW. For the total groove width ratio, a value of the ratio 2GW/TW was employed for the embodiment, and a value of the ratio (ΣGW)/TW for the conventional example. The cornering power was measured on a drum tester in the standard state. It was shown that the embodiment shows a higher value in comparison with the conventional tyre. This is considered to be because, when the total groove width ratio defined as above is constant, the inner groove wall 9a of the convex curve contributes to increasing the tyre's lateral rigidity. However, when the total groove width ratio exceeds 50%, the cornering power is significantly reduced.

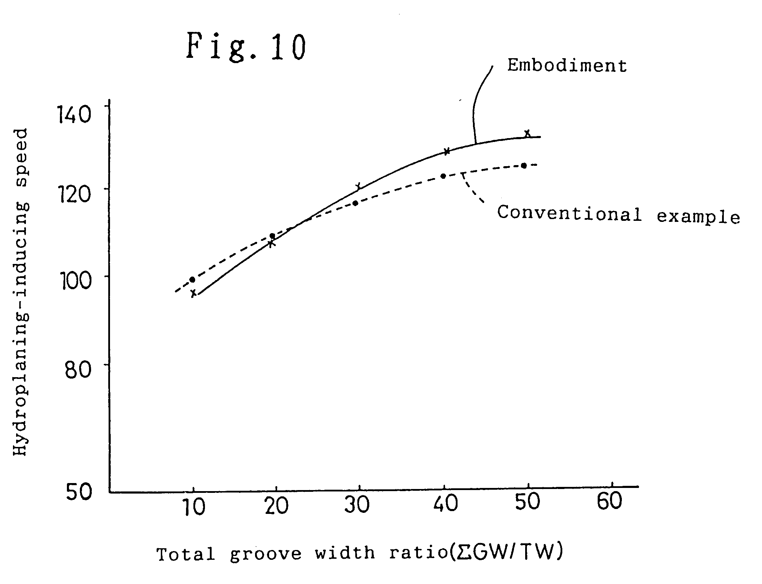

Fig. 10 shows the result of measuring, in a similar manner, the hydroplaning inducing speed. It was shown that the hydroplaning phenomenon occurred at a higher speed in the embodiment, compared to the conventional tyre. This is considered to be because the circumferential groove 7 forms a widened part 13 as shown in Fig. 11 at the front and the back of the ground-contacting centre Q, when the tyre comes in contact with the ground. The widened part 13 increases the draining performance, and prevents occurrence of columnar resonance in the circumferential groove 7.

Thus, because of the noise, dry grip performance affected by the cornering power and wet grip performance by the hydroplaning phenomenon, the groove width ratio is preferably 15% or more, more preferably 20% or more, and the total groove width ratio 30 to 50%, more preferably 40 to 50%.

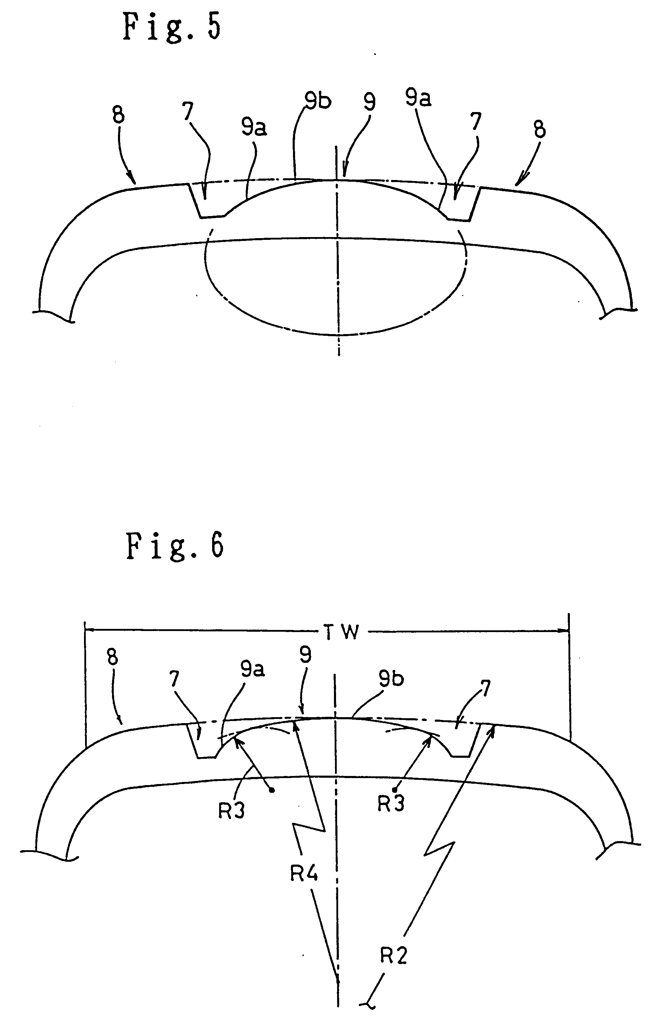

Incidentally, although the surface of the central part 9 is formed by a single arc in the embodiment shown in Fig. 1, it may be formed in a elliptic shape, as shown in Fig. 5, or a curve approximating to an ellipse.

Fig. 6 shows that the groove wall 9a and the central ground-contacting surface 9b have different radii of curvature R3, R4. The radius of curvature R3 is less than the radius of curvature R4 of the central ground-contacting surface 9b and the radius of curvature R2 of the ground-contacting surface of the shoulder parts, respectively, and the lowest limit thereof is preferably 5% or more of the ground-contacting tread width TW. If it is less than 5%, the draining effect tends to be insufficient. The higher limit is at a value identical to the radius of curvature R4, and then the central surface is formed by a single arc. The radius of curvature R4 can be close to the radius of curvature R2 as far as the wet grip performance is not inferior.

Additionally, in the right and left groove walls 9a, 9a, the curvature of radius R3 may be different between right and left such that it is larger in one groove wall 9a facing outside the vehicle when the tyre is mounted than the other for reducing sound radiation to the outside.

In a tyre with the central part 9, the heat generated in the central part 9 is comparatively high, and it is preferable to control this heat generation so as to maximise high-speed durability.

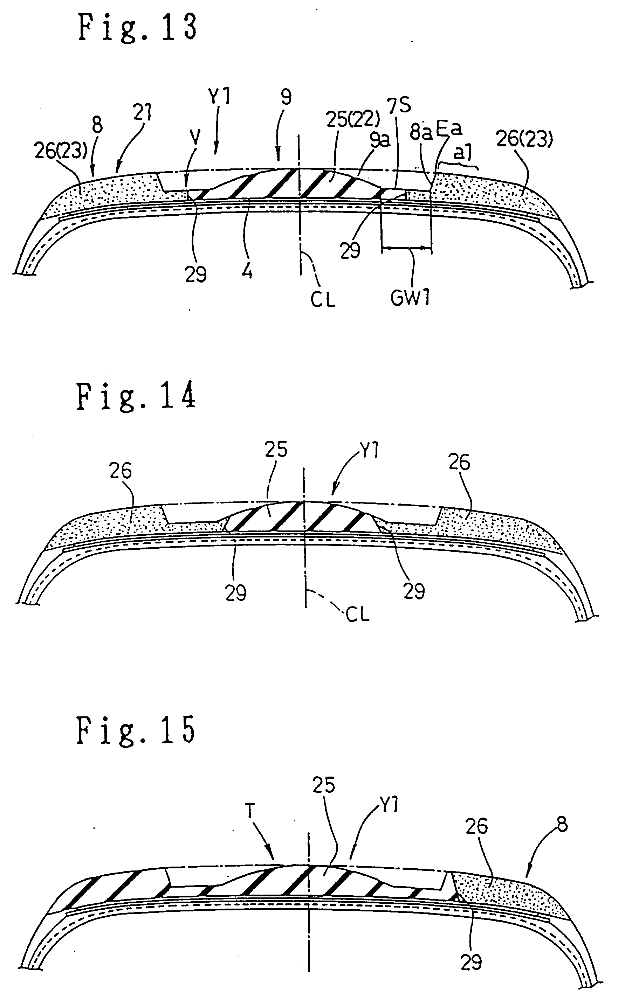

Accordingly, in the embodiment, as shown in Figs. 13 to 18, the tread rubber 21 comprises a first rubber composition 22 with a loss tangent tan δ1 of 0.01 to 0.35 and a second rubber composition with a loss tangent tan δ2 of 1.2 to 10.0 times the loss tangent tan δ1. A first rubber part 25 using the first rubber composition 22 is provided at least in a radially inner region of the central part 9 so as to be adjacent to the belt layer 4, and a second rubber part 26 using the second rubber composition member 23 is provided at least in a radially outer region of at least one shoulder part 8 so as to be adjacent to the tread surface.

In this way, since the first rubber part 25 is formed by the first rubber composition 22 with the loss tangent tan δ1 at a lower value, that is, lower in energy loss, and thereby the increase of internal temperature that tends to be excessive in the central part 9, as described above, is effectively controlled, and high-speed durability is increased.

On the other hand, as the second rubber parts 26 which are subjected to a higher ground-contacting pressure are formed by the second rubber composition 23 with the loss tangent tan δ2 of a higher value, that is, higher in energy loss, and thereby the ride comfort is increased, and steering stability in straight-running and turning is maintained in the entire tyre with enhancement of ground tracking performance and grip performance.

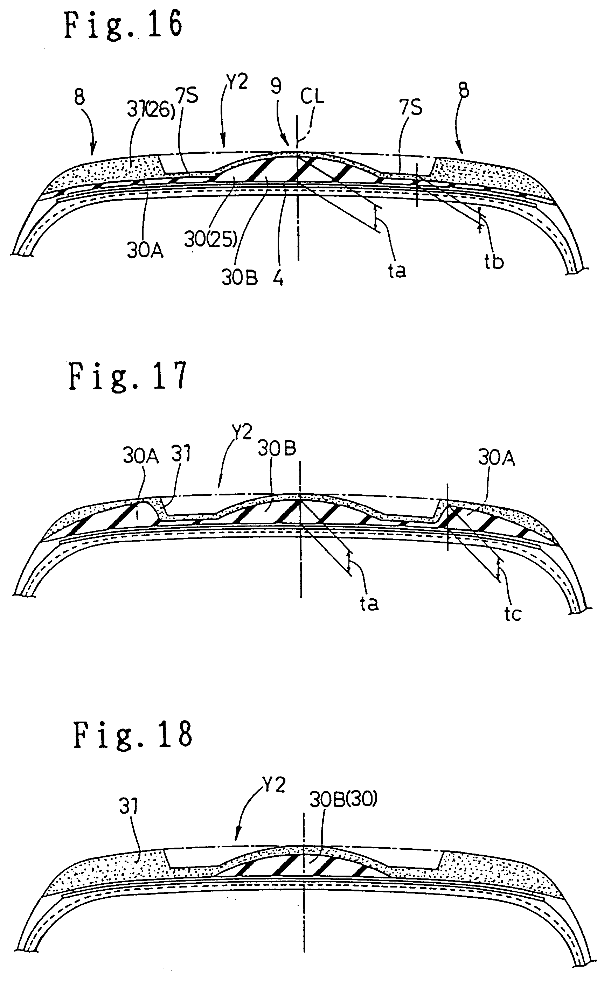

Thus for the rubber structure Y of the tread rubber 21, a laterally divided type rubber structure Y1 is formed by dividing the first and second rubber parts 25 and 26 in the axial direction of tyre as shown in Figs. 13 to 15, and a vertically divided type rubber structure Y2 is formed by dividing the first and second rubber parts 25 and 26 in the radial direction of the tyre as shown in Figs. 16 to 18 may be adopted.

As an example of the lateral division type rubber structure Y1, as shown in Fig. 13, for example, two boundaries 29 extending from origins V on the tread surface to the belt layer 4 are provided in either side of the tyre's equator CL. The first rubber part 25 is formed between the boundaries 29, 29, and the second rubber parts 26 are formed outside the boundaries 29.

The origins V, V are located outside the central ground contacting surface 9b, that is, on the inner groove wall 9a, on the groove bottom 7S or on the outer surface of the shoulder part 8. The first rubber part 25 is formed in both of the radially inner and outer regions of the central part 9. Therefore, the first rubber part 25 is disposed at least in the radially inner region of the central part 9 so as to be adjacent to the belt layer 4. Similarly, each of the second rubber parts 29 is also formed in both of the radially inner and outer regions of the shoulder part 8, therefore, disposed at least in the radially outer region of at least one of the shoulder parts 8.

The origin V is preferably provided on the groove walls 8a, 9a, on the groove bottom 7S or on an inner end part a1 of the shoulder part 8 spaced outside in the axial direction of tyre from the inner edge Ea by a distance equal to the groove bottom width GW1. The origin V is provided more preferably on the groove bottom 7S. Although the boundary 29 may be formed in the radial direction, that is, parallel to the tyre's equatorial surface, it may be formed with an inclination away from or approaching to the tyre's equator CL towards the inside in the radial direction, for example, as shown in Fig. 14.

For the rubber structure Y1, as shown in Fig. 15, one boundary 29 may be formed in the tread part T, and the first rubber part 25 then is provided inside the boundary 29 in the axial direction of the tyre. In such a case, the second rubber part 26 is formed only in one shoulder part 8, and the tyre is, then, mounted on a vehicle with the shoulder part 8 to the outside of the vehicle.

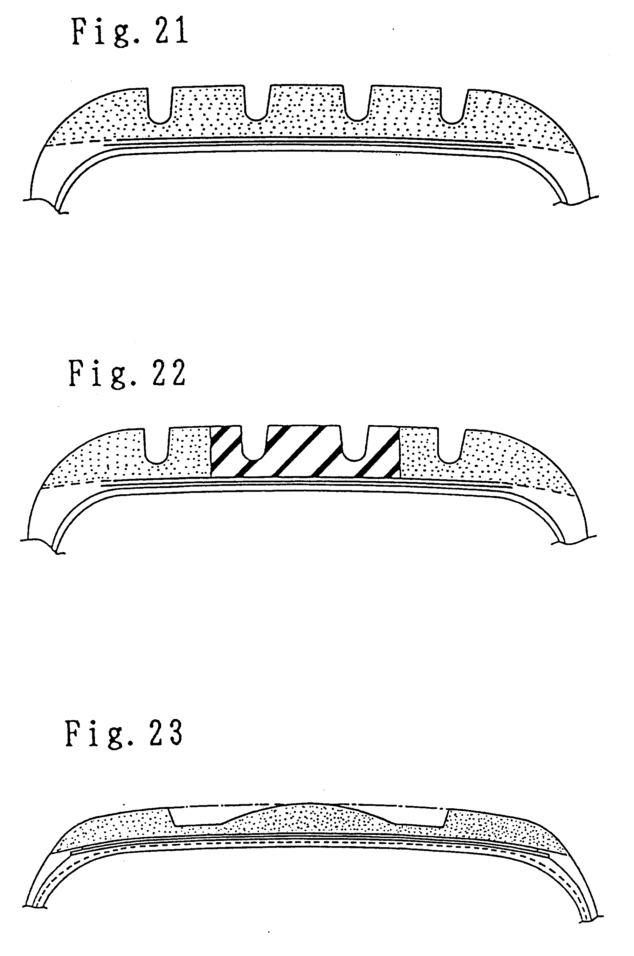

A tyre of the embodiment with the tread rubber structure shown in Fig. 13 and a tyre of a comparison example with the tread rubber structure shown in Fig. 22, wherein the tread rubber is dimensionally divided to the same widths as that of Fig. 13, were prepared. The relationship between the ratio tan δ2/tan δ1 and the high-speed durability was determined. As recognised from the measurement result shown in Fig. 19, in the tyre with the tread profile of the invention, the high-speed durability was significantly increased in the range of 1.2 to 2.0 of the ratio tan δ2/tan δ1, and the high-speed durability was improved to a level similar to that of a tyre with a conventional tread profile.

In other words, the rubber structure Y is most effective within the range of 1.2 to 2.0 of the ratio tan δ2/tan δ1, and the ratio tan δ2/tan δ1 is more preferably 2.0 to 6.0. The effect of increasing the high-speed durability is insufficient, if the ratio is less than 1.2, and the physical properties between the first and second rubber compositions 22, 23 are excessively different, if it is more than 10, thus, a separation is induced between the compositions 22, 23. In addition, properties as a rubber are lacking, if the loss tangent tan δ1 is less than 0.01, and the high-speed durability is then insufficient, if it exceeds 0.35. Therefore, the loss tangent tan δ1 is preferably within a range of 0.05 to 0.25. The loss tangent tan δ2 is preferably 0.25 or more, more preferably 0.30 or more to obtain the steering stability required.

Here, the loss tangent is the value measured by using a visco-elasticity spectrometer supplied by the Iwamoto Engineering Works measured at a temperature of 70 degrees C, initial strain 10%, dynamic strain 2% and frequency 10 Hz.

As illustrated in Fig. 16, the vertically divided type rubber structure Y2 is, for example, constructed by a base rubber 30 and a cap rubber 31. The base rubber 30 provides the first rubber part 25 placed in the radially inner region of the tread rubber 25 over the entire tread width through the central part 9, groove bottoms 7S and shoulder parts 8. The cap rubber 31 provides the second rubber part 26 covering the base rubber 30 being placed radially outside thereof.

In the embodiment, the base rubber 30 has an outer part 30A which extends below the shoulder parts 8 and groove bottom surfaces 7S with a generally constant small thickness and an inner part 30B which extends below the central part 9 with an outer convex surface generally parallel to the surface of the central part 9. Thus, the base rubber 30 has a highest thickness at the tyre's equator CL, and the thickness ta of the base rubber from the belt layer 4 in the tyre's equator CL, which is the highest thickness, is higher than the total thickness tb of the tread rubber from the belt layer 4 at the groove bottoms 7S.

As shown in Table 2 of an example, the relationship between the thickness ratio ta/tb and high-speed durability was measured by embodiment tyres 5 to 12 having the tread structure shown in Fig. 16. For the measuring conditions, the ratio tan δ2/tan δ1 was constantly set at 0.30/0.15 (= 2.0), and the total thickness tb constantly at 3.0 mm. As shown in Table 2, it was shown that the high-speed durability was increased, as the ratio ta/tb increased. Specifically, the high-speed durability was substantially increased within a range of 1.0 to 1.3 of the thickness ratio ta/tb. It means that the rubber structure Y2 is most effective from thickness ratio ta/tb 1.0 to 1.3 and the thickness ratio ta/tb is more preferably 1.3 or more. The total thickness tb is generally about 3 mm in a tyre, and the thickness ratio ta/tb is, therefore, allowable in such a range of thickness ta that the base rubber 30 is not exposed to the outer surface of the tyre.

With the rubber structure Y2, as shown in Fig. 17, the highest rubber thickness tc in the outer part 30A of the base rubber 30 may be increased to a value approximately equal to the rubber thickness ta, and the base rubber 30 may be formed by eliminating the outer part 30A and employing an inner part 30B only, as shown in Fig. 18.

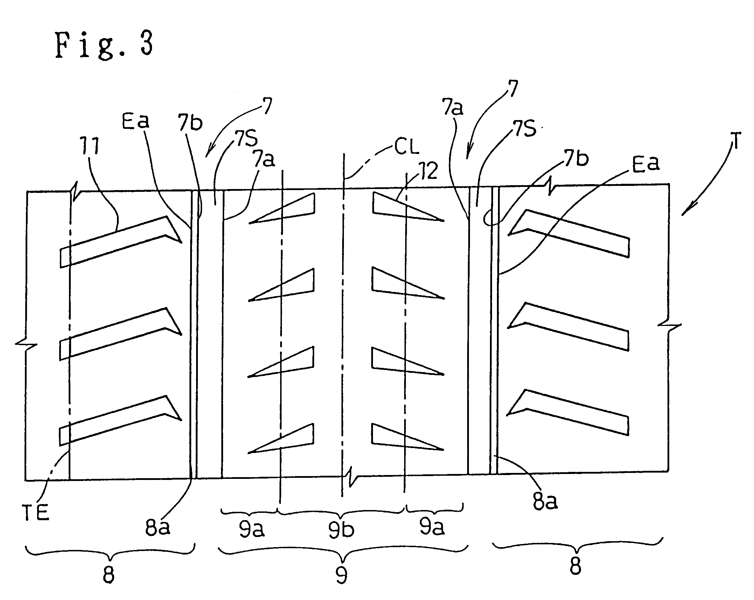

In addition, in the embodiment, the shoulder parts 8 and the central part 9 are provided with lateral grooves 11, 12 extending substantially in the axial direction of tyre to increase the wet grip performance. As illustrated in Fig. 3, for example, in the embodiment, lateral grooves 11 are provided in the shoulder parts 8. Each lateral groove 11 extends from a position spaced from the circumferential groove 7 in the axial direction of tyre towards the outside, and opens in the tread edge. The shoulder part is protected from loss of rigidity by not connecting the lateral groove with the circumferential groove 7, and the wet grip performance is increased by making it open to the tread edge.

A lateral groove 12 of the central part 9 opens only at one end to a circumferential groove 7, and the inner end thereof in the axial direction of tyre is terminated in the vicinity of the equator CL. By terminating the lateral grooves in the vicinity of the equator CL, the rigidity of the central part is maintained, and steering stability is assured. Groove bottom surfaces 11a, 12a of the lateral grooves 11, 12 are approximately parallel to the belt layer 4. And inner end surfaces 11b, 12b of the lateral grooves 11, 12 in the axial direction are parallel to the tyre's equator CL, or at an angle β to a radial line Y which is a small angle of less than 15 degrees.

In such a manner, reduction of the wet grip performance due to reduction in length of the lateral grooves as the tyre is worn can be controlled. Other factors such as circumferential pitch and depth may be selected according to the particular purpose.

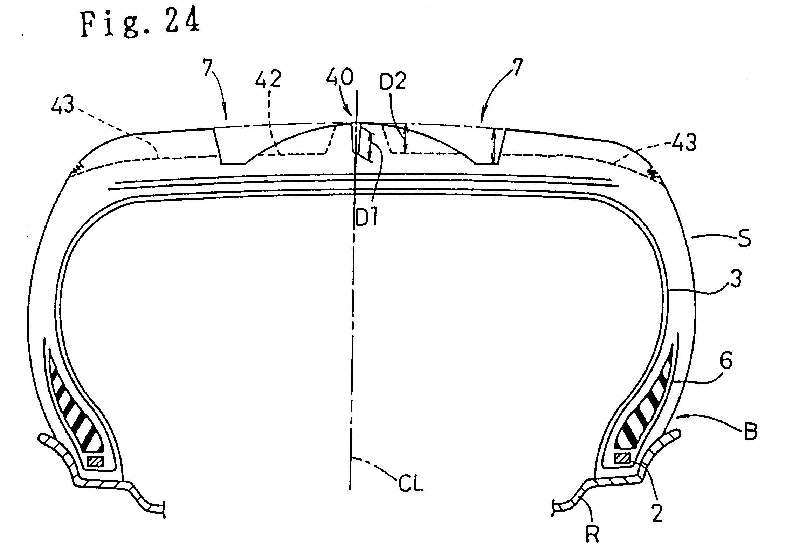

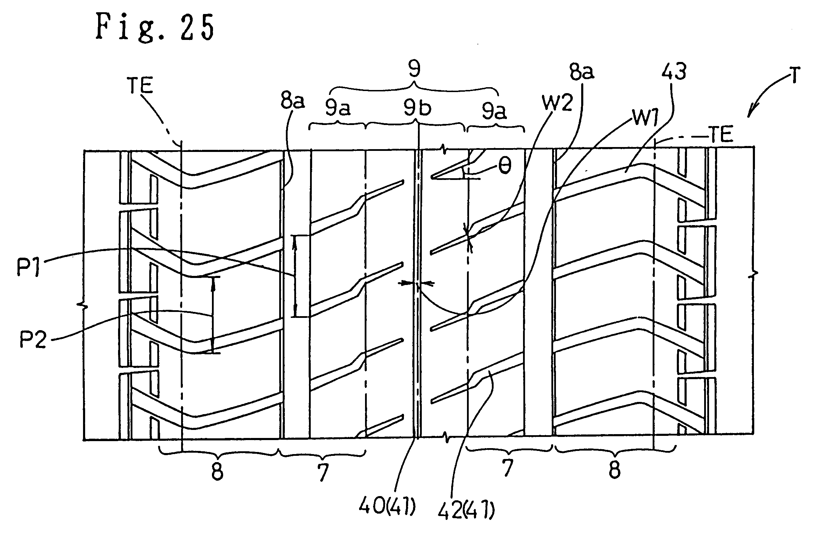

As a means for controlling heat generation in the central part 9, a radiation groove 41 including at least a circumferential radiation groove 40 for heat release may be formed in the central part 9, as shown in Fig. 24 and 25. Either one or both of the radiation grooves 41 and the formation of tread rubber by the first and second rubber compositions as mentioned above, may be employed.

The radiation groove 41 comprises, in the embodiment, a circumferential radiation groove 40 and lateral radiation grooves 42. The circumferential radiation groove 40 is formed as a narrow groove continuously extending substantially along the tyre's equator. The radiation groove 40 is capable of maintaining the pattern rigidity, while providing a heat radiation effect, by setting the groove depth D1 thereof at 0.4 to 0.9 times the groove depth D of the circumferential groove 7, and a groove width W1 at 5 mm or less. If the groove width W1 is more than 5 mm, and the groove depth D1 is more than 0.9 times the groove depth D, then columnar resonance is caused. If the groove depth D1 is less than 0.4 times the groove depth D, the heat radiation effect is insufficient.

The lateral radiation groove 42 extends from a position of an inner end spaced from the circumferential radiation groove 40 towards the outside in the axial direction of the tyre at an inclination Θ of 20 degrees or more to the axial direction of the tyre, and an outer end thereof opens into the circumferential groove 7.

Thus, because the lateral radiation groove 42 is spaced from the circumferential radiation groove 40, the rigidity of the central part 9 is maintained, and steering stability is assured.

The groove depth D2 of the lateral radiation groove 42 is similarly 0.4 to 0.9 times the groove depth D, and the groove width W2 is 3 mm or less at least in the central ground-contacting surface 9b. If the groove depth D2 is more than 0.9 times the groove depth D, the groove width W2 is more than 3 mm, and the inclination Θ is less than 20 degrees, then the pitch noise of the lateral radiation groove 42 is excessively high. If the groove depth D2 is less than 0.4 times the groove depth D, a sufficient heat radiation effect cannot be expected.

In the circumferential and lateral radiation grooves 40 and 42, an angle established by a groove wall in the grooves 40, 42 and a normal on the tread surface, that is, the inclination gradient of the groove wall is set at 15 degrees or less, more preferably 5 degrees or less, respectively, and the dimensional change of the radiation groove 41 due to wear of the tyre is thereby controlled.

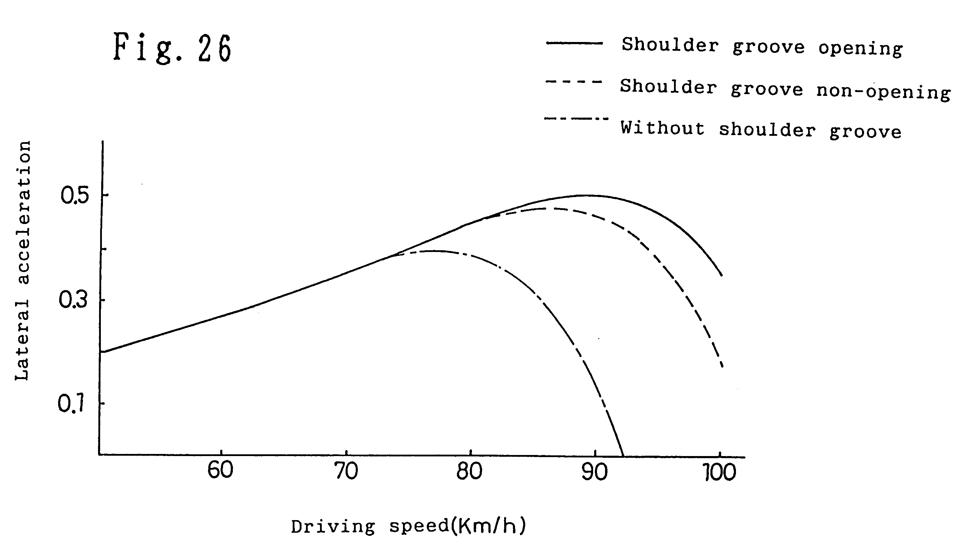

In the embodiment, a shoulder groove 43 is additionally formed in the shoulder parts 8. Each shoulder groove 43 is an open groove with an inner end thereof opening in the circumferential groove 7 and an outer end in the tread end. Thus, by opening it in the circumferential groove, the heat radiation effect is further increased, increase of temperature in the shoulder groove 8 is significantly reduced, the draining performance is enhanced, and hydroplaning performance in turning (lateral hydroplaning performance) is increased, for example, as shown in Fig. 26.

The average pitch length of a lateral groove in the circumferential direction of the tyre is generally about 30 mm, and the resultant primary frequency at a speed of 60 km/h, for example, is 500 to 600 Hz, thus, showing a coincidence with a frequency of noise peak in a tyre with a tread profile having the convex central part 9. Therefore, in the embodiment, the average pitch length P1 of the lateral radiation groove 42 and the average pitch length P2 of the shoulder groove 43 are preferably set at 40 mm or more, respectively, so that the primary pitch frequency of the grooves 42, 43 are different from the noise peak.

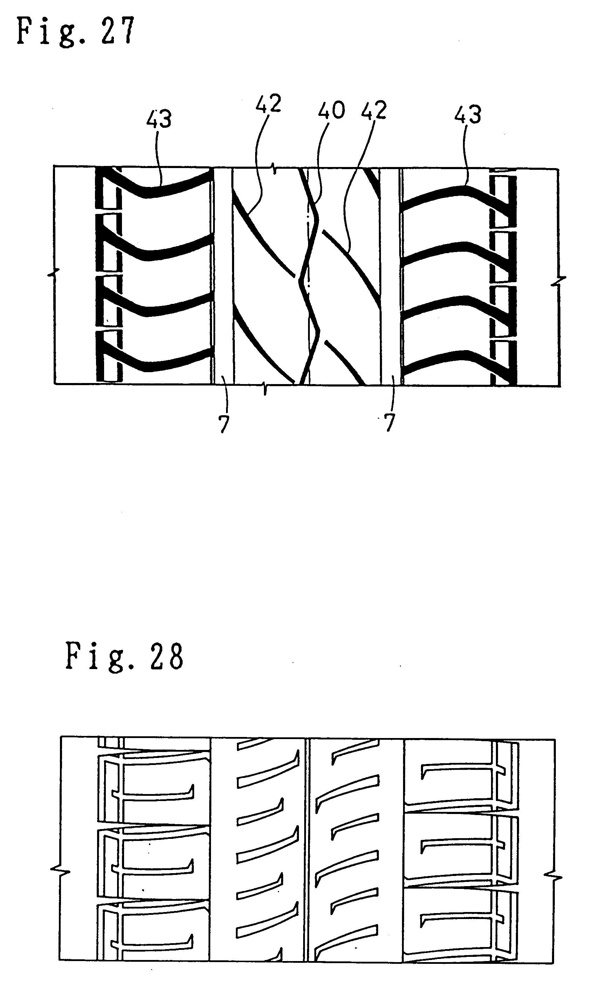

Fig. 27 shows an example of a circumferential radiation groove 40 formed as a zigzag groove.

Detailed examples will now be described.

In a first set of tests a tyre of 205/55 R15 in size was produced according to specifications shown in Tables 1 and 2, and measured for the steering stabilities in straight-running and cornering and for high-speed durability. The results of the measurement are shown in the tables. The performances are indicated by index, setting a conventional example 1 at 100, and a higher score shows better performance. Although the tyre of embodiment 5 having a tread profile of the invention shows a significantly higher effect in tyre noise and wet grip performance, as described, it is higher in heat generation in the tread centre and inferior in high-speed durability in comparison with a conventional tyre with an identical tread rubber composition. By employing such tread profile and the tread rubber structure, as shown in embodiments 1, 2, 3 and 4, the steering stability is maintained, while the high-speed durability is increased.

In addition, as shown in embodiments 11 to 18, it is seen that the durability is superior at a higher value of the thickness ratio ta/tb.

In a second set of tests tyres of 205/55 R15 in size were produced according the to specifications shown in Table 3, and measured for noise, cornering power, hydroplaning-inducing speed and high-speed durability. The result of the measurements is shown in the Table. Embodiments 21 to 26 have the tread profile of Figs. 1 and 6, and conventional tyres 21 to 23 have the tread profile of Fig. 20. The result is shown by index, setting a conventional tyre 21 at 100. All tyres were measured in the conditions described above, and a higher score shows better performance. It is observed that the tyre of the embodiment is superior in the hydroplaning characteristic, provides increased cornering power while reducing noise, in comparison with to the conventional example of a tyre of similar total groove width ratio. Moreover, because the tyres of the embodiments 21 to 23 are provided with a radiation groove, it is seen that increase of temperature in the tread is controlled, and high-speed durability is increased to a similar level to that of a conventional tyre.

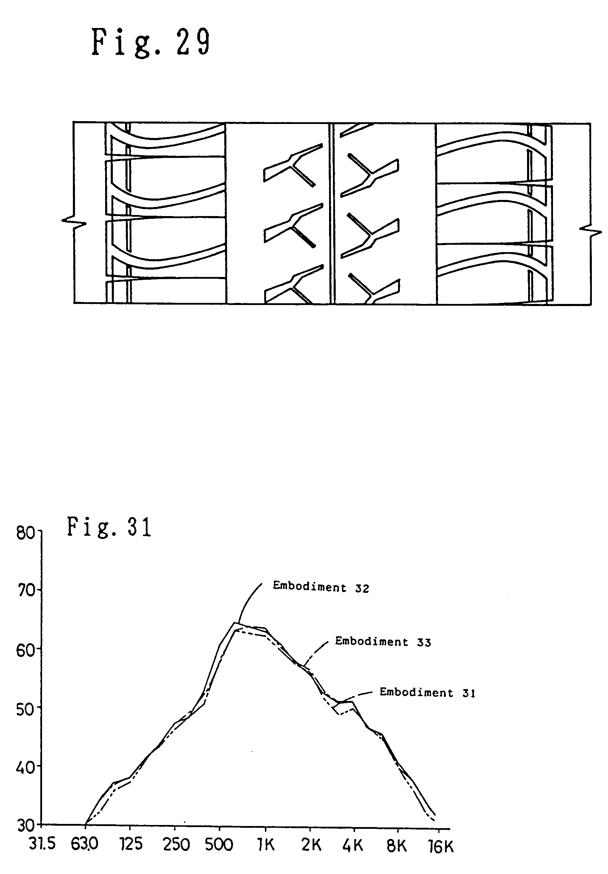

In a third set of tests tyres of 205/55 R15 in size were produced with different tread patterns as shown in Fig. 24, 28 and 29 according to the specifications of Table 4, and the noise performance, durability, steering stability and residual cornering force CF were compared.

As shown in Table 4 and Fig. 31, the noise level (frequency not analysed) is increased from that of embodiment 31 by 0.9 dB in embodiment 33 and 1.4 dB in embodiment 32, that is relatively high. It is considered to be due to the peak of primary frequency at 60 km/h being at 420 Hz with a pattern of the embodiment 33, while the peak of primary frequency is 570 Hz with the pattern of the embodiment 32, and coincides with the peak (630 Hz) of the embodiment 32.

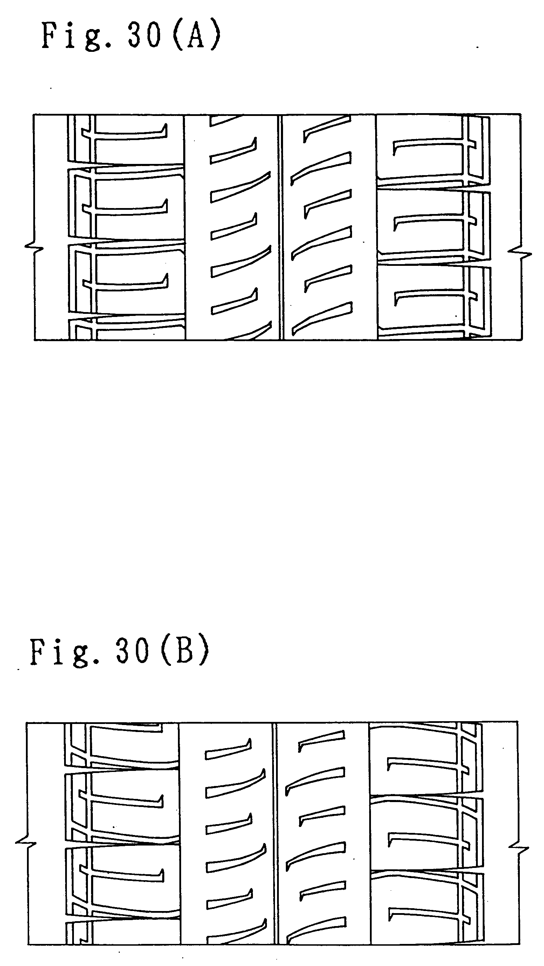

In terms of high-speed durability, although embodiment 33 is superior to embodiment 32, both of them are at a practical level. As for steering stability, embodiment 33 is equivalent or slightly superior to the embodiment 32. Regarding the residual CF, although the embodiment 33 is in the negative side, it is higher than the embodiment 31. Therefore, in order to reduce the residual CF, it is preferable, for example, to displace a pattern limited by the tyre's equator by 0.5 pitch in the circumferential direction, as shown in Fig. 30(A), or reduce the angle of the radiation groove to the axial direction, as shown in Fig. 30(B).

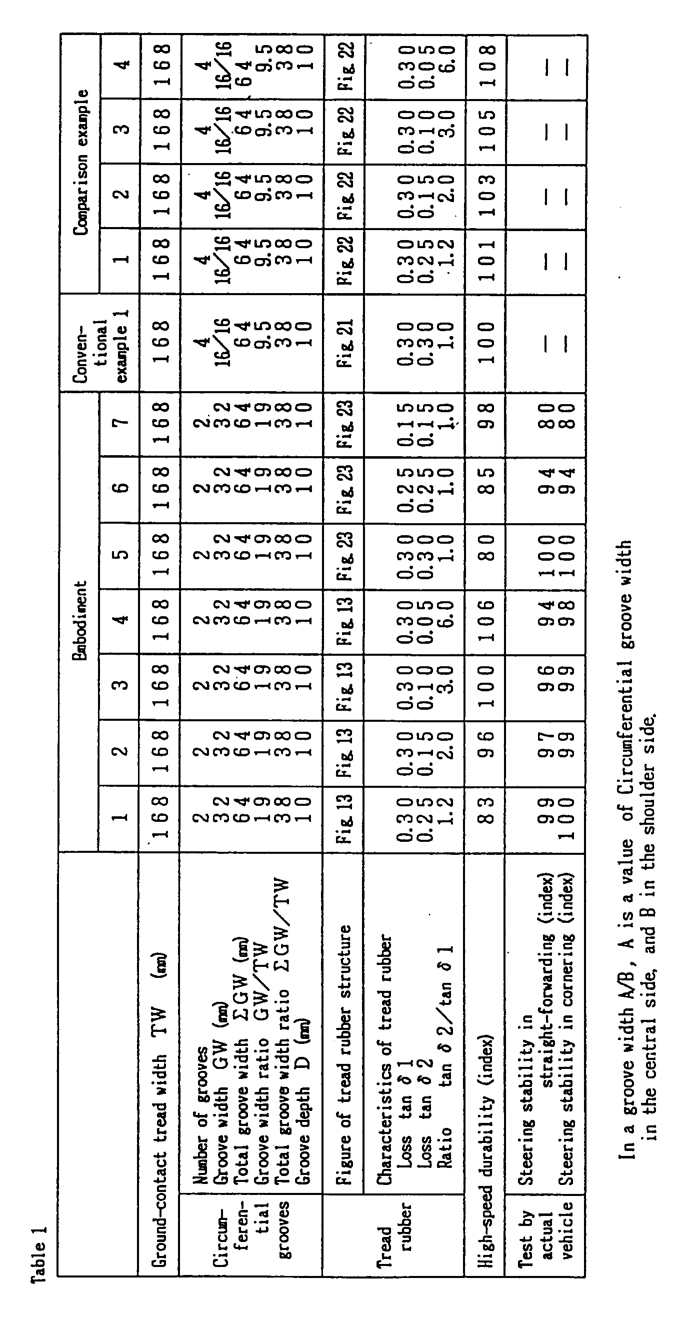

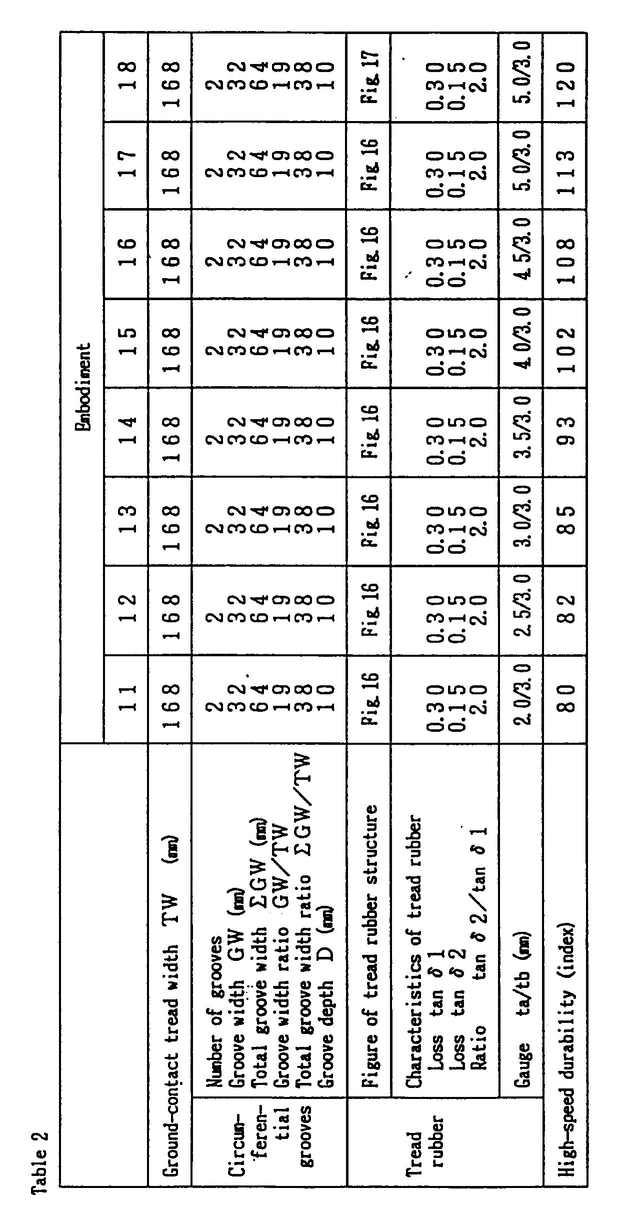

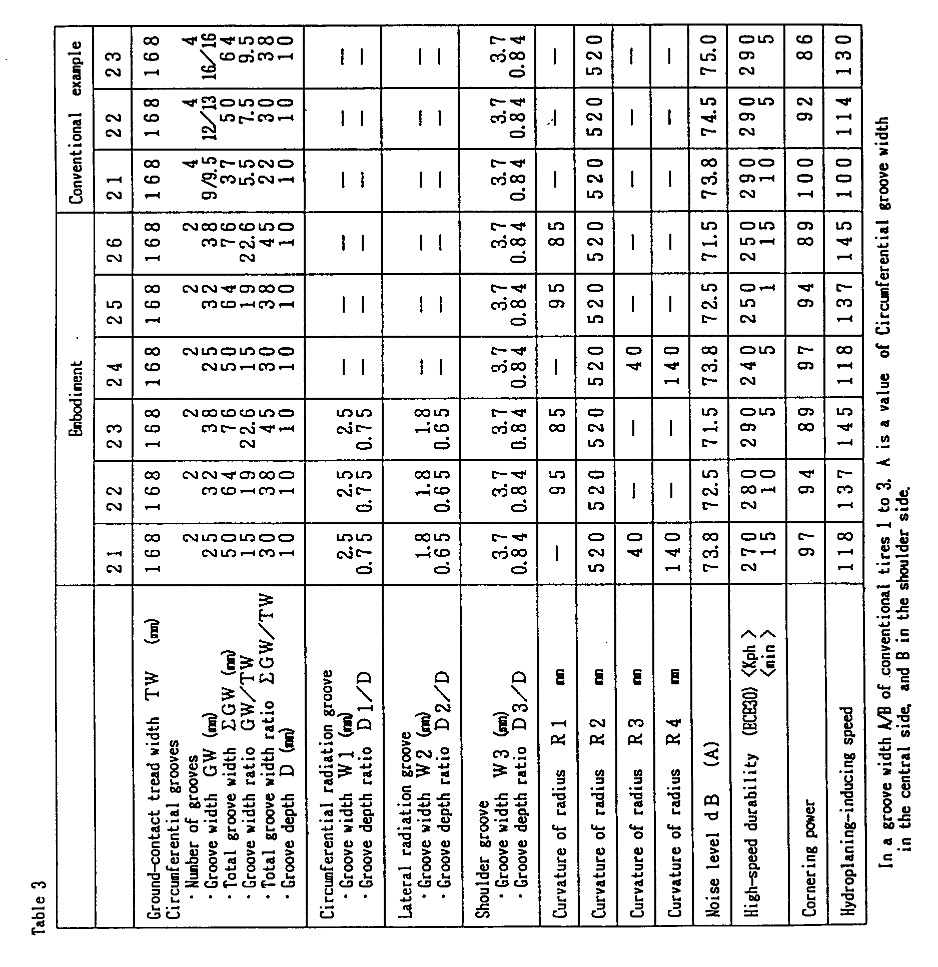

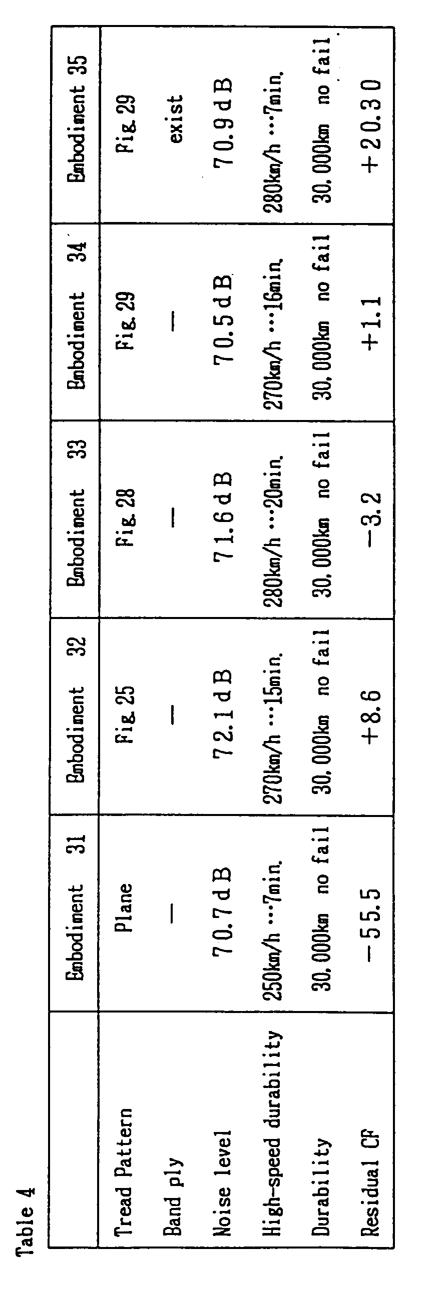

## Claims

1. A pneumatic tyre comprising a tread part (T) having two circumferential grooves (7) continuously extending in the circumferential direction in either side of the tyre's equator so as to divide the tread part (T) into a pair of shoulder parts (8), which are located outside outer bottom edges (7b) of the circumferential grooves (7) in the axial direction of tyre, and a central part (9), which is located between inner bottom edges (7a) of the circumferential grooves (7) in the axial direction of tyre, characterised in that the central part (9) has a surface comprising successive convex curves composed of a pair of inner groove walls (9a) extending inwards, in the axial direction of tyre, along a curve convex outwardly in the radial direction from the inner bottom edges of the circumferential grooves and a central ground-contacting surface (9b) smoothly connected between the pair of the inner groove walls (9a), and the central ground-contacting surface (9b) is substantially in contact with a virtual tread line (10) between outer surfaces of the shoulder parts (8).

2. A pneumatic tyre according to claim 1, characterised in that said surface (9b) of the central part (9) is configured by a curve comprising an arc of a single radius of curvature.

3. A pneumatic tyre according to claim 1, characterised in that said surface (9b) of the central part (9) is configured by curves comprising arcs of different radii of curvature between the inner groove walls (9a) and the central ground-contacting surface.

4. A pneumatic tyre according to claim 1, characterised in that said surface (9b) of the central part (9) is configured by a curve substantially formed in an elliptic shape by the inner groove walls and the central ground-contacting surface (9).

5. A pneumatic tyre according to any of claims 1 to 4, characterised in that the tread rubber (21) of the tread part (T) is composed of a first rubber composition (22) of a loss tangent tan δ1 at 0.01 to 0.35 and a second rubber composition (23) of a loss tangent tan δ2 of 1.2 to 10 times the loss tangent tan δ1, a first rubber part (25) using the first rubber composition (22) is provided at least in a radially inner region of the central part (9) so as to be adjacent to a belt layer (4), and a second rubber part (26) using the second rubber composition (23) is provided at least in a radially outer region of at least one shoulder part (8) so as to be adjacent to the tread surface.

6. A pneumatic tyre according to claim 5, characterised in that the tread part has a boundary (29) passing from the tread surface to the belt layer (4) in a position spaced from the tyre's equator, the first rubber part (25) is located inside the boundary in the axial direction of tyre, and the second rubber part (26) is located outside the boundary.

7. A pneumatic tyre according to claim 6, characterised in that the boundary has an origin (V) on a groove bottom (7S) of the circumferential groove, the outer surface of the shoulder part (8) or the inner groove wall (9a).

8. A pneumatic tyre according to claim 7, characterised in that the boundary (V) extends in the radial direction.

9. A pneumatic tyre according to claim 7, characterised in that the boundary (V) is inclined to the radial direction.

10. A pneumatic tyre according to any of claims 5 to 9, characterised in that the central part has a base rubber (30) that provides the first rubber part (30) and a cap rubber (31) that provides the second rubber part (26) covering the base rubber.

11. A pneumatic tyre according to any of claims 5 to 9, characterised in that the tread part (T) has the base rubber (30) that provides the first rubber part (30) placed in radially inner region of the tread (T) over the entire tread width through the central part, the groove bottom (7S) and the shoulder part (8) and the cap rubber (31) that provides the second rubber part (26) covering the base rubber.

12. A pneumatic tyre according to claim 11, characterised in that a thickness ta from the belt layer (4) of the base rubber (30) in the tyre's equator is larger than the total rubber thickness tb from the belt layer (4) of the tread rubber in the bottom (7S) of the circumferential groove (7).

13. A pneumatic tyre according to any of claims 1 to 12, characterised in that the central ground-contacting surface is provided with a circumferential radiation groove (41) continuously extending along the tyre's equator and having a groove depth D1 of 0.4 to 0.9 times the groove depth D of the circumferential groove (7) and a groove width W1 of 5 mm or less.

14. A pneumatic tyre according to claim 13, characterised in that the central part (9) is provided in either side of the circumferential radiation groove (41) with lateral radiation grooves (42) having a groove depth D2 of 0.4 to 0.9 times the groove depth D of the circumferential groove (7) and extending at an inclination of 20 degrees or more to the axial direction of tyre, and the lateral radiation grooves (42) are is spaced at an inner end thereof from the circumferential radiation groove (41), open at an outer end thereof to the circumferential groove (7), and have a groove width W2 of 3 mm or less at least in the central ground-contacting surface.

15. A pneumatic tyre according to claim 13 or 14, characterised in that the shoulder parts (8) are provided with shoulder grooves (43) which open at an inner end thereof in the circumferential groove (7) and at an outer end thereof in the tread edge.

## Patentansprüche

1. Ein Luftreifen mit einem Laufflächenteil (T) mit zwei Umfangsnuten (7), die sich kontinuierlich in der Umfangsrichtung in beiden Seiten des Reifenäquators erstrecken, um den Laufflächenteil (T) in ein Paar von Schulterteilen (8), die außerhalb äußerer Bodenkanten (7b) der Umfangsnuten (7) in der axialen Richtung des Reifens angeordnet sind, und einen zentralen Teil (9) zu unterteilen, der zwischen inneren Bodenkanten (7a) der Umfangsnuten (7) in der axialen Richtung des Reifens angeordnet ist,
dadurch gekennzeichnet,
daß der zentrale Teil (9) eine Fläche aufweist, die sukzessive konvexe Kurven umfaßt, welche aus einem Paar von inneren Nutwänden (9a), die sich nach innen in der axialen Richtung des Reifens entlang einer Kurve konvex nach außen in der radialen Richtung von den inneren Bodenkanten der Umfangsnuten erstrecken, und einer zentralen Grundkontaktfläche (9b) bestehen, die sanft das Paar der inneren Nutwände (9a) verbindet, und daß die zentrale Grundkontaktfläche (9b) im wesentlichen mit einer virtuellen Laufflächenlinie (10) zwischen äußeren Oberflächen der Schulterteile (8) in Kontakt steht.

2. Ein Luftreifen nach Anspruch 1,
dadurch gekennzeichnet,
daß die Fläche (9b) des zentralen Teils (9) durch eine Kurve konfiguriert ist, die einen Bogen mit einem einzigen Krümmungsradius umfaßt.

3. Ein Luftreifen nach Anspruch 1,
dadurch gekennzeichnet,
daß die Fläche (9b) des zentralen Teils (9) durch Kurven konfiguriert ist, die Bögen mit verschiedenen Krümmungsradien zwischen den inneren Nutwänden (9a) und der zentralen Grundkontaktfläche umfassen.

4. Ein Luftreifen nach Anspruch 1,
dadurch gekennzeichnet,
daß die Fläche (9b) des zentralen Teils (9) durch eine Kurve konfiguriert ist, die im wesentlichen in einer elliptischen Form durch die inneren Nutwände und die zentrale Grundkontaktfläche (9) gebildet ist.

5. Ein Luftreifen nach einem der Ansprüche 1 bis 4,
dadurch gekennzeichnet,
daß das Laufflächengummi (21) des Laufflächenteils (T) aus einer ersten Gummizusammensetzung (22) mit einem Verlustfaktor tan δ1 bei 0,01 bis 0,35 und einer zweiten Gummizusammensetzung (23) mit einem Verlustfaktor tan δ2 des 1,2- bis 10-fachen des Verlustfaktors tan δ1 besteht, daß ein erster Gummiteil (25), welcher die erste Gummizusammensetzung (22) verwendet, zumindest in einer radial inneren Region des zentralen Teils (9) vorgesehen ist, um benachbart zu einer Gürtelschicht (4) zu sein, und daß ein zweiter Gummiteil (26), welcher die zweite Gummizusammensetzung (23) verwendet, wenigstens in einer radial äußeren Region wenigstens eines Schulterteils (8) vorgesehen ist, um benachbart zur Laufflächenoberfläche zu sein.

6. Ein Luftreifen nach Anspruch 5,
dadurch gekennzeichnet,
daß der Laufflächenteil eine Grenze (29) aufweist, die von der Laufflächenoberfläche zur Gürtelschicht (4) in einer vom Reifenäquator beabstandeten Position verläuft und der erste Gummiteil (25) innerhalb der Grenze in der axialen Richtung des Reifens und der zweite Gummiteil (26) außerhalb der Grenze angeordnet ist.

7. Ein Luftreifen nach Anspruch 6,
dadurch gekennzeichnet,
daß die Grenze einen Ursprung (V) auf einem Nutboden (7S) der Umfangsnut, der äußeren Oberfläche des Schulterteils (8) oder der inneren Nutwand (9a) aufweist.

8. Ein Luftreifen nach Anspruch 7,
dadurch gekennzeichnet,
daß sich die Grenze (V) in der radialen Richtung erstreckt.

9. Ein Luftreifen nach Anspruch 7,
dadurch gekennzeichnet,
daß die Grenze (V) zur radialen Richtung geneigt ist.

10. Ein Luftreifen nach einem der Ansprüche 5 bis 9,
dadurch gekennzeichnet,
daß der zentrale Teil ein Basisgummi (30), das den ersten Gummiteil (30) schafft, und ein Kappengummi (31) aufweist, das den zweiten Gummiteil (26) schafft, welcher das Basisgummi bedeckt.

11. Ein Luftreifen nach einem der Ansprüche 5 bis 9,
dadurch gekennzeichnet,
daß der Laufflächenteil (T) das Basisgummi (30), das den ersten Gummiteil (30) schafft, der in einer radial inneren Region der Lauffläche (T) über die gesamte Laufflächenbreite durch den zentralen Teil, den Nutboden (7S) und den Schulterteil (8) angeordnet ist, und das Kappengummi (31) aufweist, das den zweiten Gummiteil (26) schafft, der das Basisgummi bedeckt.

12. Ein Luftreifen nach Anspruch 11,
dadurch gekennzeichnet,
daß eine Dicke ta von der Gürtelschicht (4) des Basisgummis (30) im Reifenäquator größer als die gesamte Gummidicke tb von der Gürtelschicht (4) des Laufflächengummis im Boden (7S) der Umfangsnut (7) ist.

13. Ein Luftreifen nach einem der Ansprüche 1 bis 12,
dadurch gekennzeichnet,
daß die zentrale Grundkontaktfläche mit einer Umfangsabstrahlungsnut (41) versehen ist, die sich kontinuierlich entlang des Reifenäquators erstreckt und eine Nuttiefe D1 von dem 0,4- bis 0,9-fachen der Nuttiefe D der Umfangsnut (7) und eine Nutbreite W1 von 5 mm oder weniger aufweist.

14. Ein Luftreifen nach Anspruch 13,
dadurch gekennzeichnet,
daß der zentrale Teil (9) in beiden Seiten der Umfangsabstrahlungsnut (41) mit lateralen Abstrahlungsnuten (42) versehen ist, die eine Nuttiefe D2 von dem 0,4- bis 0,9-fachen der Nuttiefe D der Umfangsnut (7) aufweisen und sich mit einer Neigung von 20 Grad oder mehr zur axialen Richtung des Reifens erstrecken, und daß die lateralen Abstrahlungsnuten (42) an einem inneren Ende davon von der Umfangsabstrahlungsnut (41) beabstandet sind, sich an einem äußeren Ende davon zur Umfangsnut (7) öffnen und eine Nutbreite W2 von 3 mm oder weniger zumindest in der zentralen Grundkontaktfläche aufweisen.

15. Ein Luftreifen nach Anspruch 13 oder 14,
dadurch gekennzeichnet,
daß die Schulterteile (8) mit Schulternuten (43) versehen sind, die sich an einem inneren Ende davon in der Umfangsnut (7) und an einem äußere Ende davon in der Laufflächenkante öffnen.

## Revendications

1. Pneumatique comprenant une partie (T) de bande de roulement ayant deux gorges circonférentielles (7) disposées de façon continue dans la direction circonférentielle des deux côtés de l'équateur du pneumatique afin qu'elles divisent la partie (T) de bande de roulement en deux parties (8) d'épaulement, placées à l'extérieur des bords inférieurs externes (7b) des gorges circonférentielles (7) dans la direction axiale du pneumatique, et une partie centrale (9) qui est placée entre les bords inférieurs internes (7a) des gorges circonférentielles (7) dans la direction axiale du pneumatique, caractérisé en ce que la partie centrale (9) a une surface comprenant des courbes convexes successives composées de deux parois internes (9a) de gorges dirigées vers l'intérieur, dans la direction axiale du pneumatique, le long d'une courbe convexe vers l'extérieur dans la direction axiale à partir des bords inférieurs internes des gorges circonférentielles, et une surface centrale (9b) de contact avec le sol raccordée progressivement entre les parois internes (9a) de gorges, et la surface centrale (9b) de contact avec le sol est pratiquement au contact d'une ligne virtuelle (10) de la bande de roulement comprise entre les surfaces externes des parties d'épaulement (8).

2. Pneumatique selon la revendication 1, caractérisé en ce que la surface (9b) de la partie centrale (9) a une configuration formée par une courbe comprenant un arc de cercle ayant un seul rayon de courbure.

3. Pneumatique selon la revendication 1, caractérisé en ce que la surface (9b) de la partie centrale (9) est délimitée par des courbes comprenant des arcs de rayon de courbure différents entre les parois internes (9a) des gorges et la surface centrale de contact avec le sol.

4. Pneumatique selon la revendication 1, caractérisé en ce que la surface (9b) de la partie centrale (9) a une configuration délimitée par une courbe formée pratiquement avec une configuration elliptique par les parois internes de gorge et la surface centrale (9) de contact avec le sol.

5. Pneumatique selon l'une quelconque des revendications 1 à 4, caractérisé en ce que le caoutchouc (21) de la partie (T) de bande de roulement est composé d'une première composition (22) ayant une tangente à l'angle des pertes tgδ1 comprise entre 0,01 et 0,35 et une seconde composition (23) ayant une tangente à l'angle des pertes tgδ2 comprise entre 1,2 et 10 fois la tangente à l'angle des pertes tgδ1, une première partie (25) de caoutchouc ayant la première composition (22) est placée au moins dans la région radialement interne de la partie centrale (9) afin qu'elle soit adjacente à une couche (4) de bande de roulement, et une seconde partie (26) de caoutchouc ayant la seconde composition (23) est disposée au moins dans une région radialement externe d'au moins une partie (8) d'épaulement afin qu'elle soit adjacente à la surface de la bande de roulement.

6. Pneumatique selon la revendication 5, caractérisé en ce que la partie de bande de roulement a une limite (29) allant de la surface de bande de roulement à la couche de ceinture (4) en position distante de l'équateur du pneumatique, la première partie (25) de caoutchouc est placée à l'intérieur de la limite dans la direction axiale du pneumatique, et la seconde partie (26) de caoutchouc est placée à l'extérieur de la limite.

7. Pneumatique selon la revendication 6, caractérisé en ce que la limite a une origine (V) sur un fond (7S) de la gorge circonférentielle, la surface externe de la partie (8) d'épaulement ou la paroi interne (9a) de gorge.

8. Pneumatique selon la revendication 7, caractérisé en ce que la limite (V) est placée dans la direction radiale.

9. Pneumatique selon la revendication 7, caractérisé en ce que la limite (V) est inclinée par rapport à la direction radiale.

10. Pneumatique selon l'une quelconque des revendications 5 à 9, caractérisé en ce que la partie centrale a un caoutchouc (30) de base qui forme la première partie (30) de caoutchouc et un caoutchouc de revêtement (31) qui forme la seconde partie (26) de caoutchouc qui recouvre le caoutchouc de base.

11. Pneumatique selon l'une quelconque des revendications 5 à 9, caractérisé en ce que la partie (T) de bande de roulement comprend le caoutchouc de base (30) qui forme la première partie (30) de caoutchouc placée dans une région radialement interne de la bande de roulement (T) sur toute la largeur de la bande de roulement en passant par la partie centrale, le fond de gorge (7S) et la partie d'épaulement (8), et le caoutchouc de revêtement (31) qui forme la seconde partie (26) de caoutchouc recouvrant le caoutchouc de base.

12. Pneumatique selon la revendication 11, caractérisé en ce que l'épaisseur ta depuis la couche de ceinture (4) de caoutchouc de base (30) à l'équateur du pneumatique est supérieure à l'épaisseur totale de caoutchouc tb depuis la couche de ceinture (4) du caoutchouc de la bande de roulement au fond (7S) de la gorge circonférentielle (7).

13. Pneumatique selon l'une quelconque des revendications 1 à 12, caractérisé en ce que la surface centrale de contact avec le sol a une gorge circonférentielle (41) de rayonnement disposée de façon continue le long de l'équateur du pneumatique et ayant une profondeur D1 comprise entre 0,4 et 0,9 fois la profondeur D de la gorge circonférentielle (7) et une largeur W1 inférieure ou égale à 5 mm.

14. Pneumatique selon la revendication 13, caractérisé en ce que la partie centrale (9) comprend, de part et d'autre de la gorge circonférentielle (41) de rayonnement, des gorges latérales (42) de rayonnement ayant une profondeur D2 comprise entre 0,4 et 0,9 fois la profondeur D de la gorge circonférentielle (7) et ayant une inclinaison supérieure ou égale à 20° par rapport à la direction axiale du pneumatique, et les gorges latérales (42) de rayonnement qui sont séparées, à une extrémité interne, de la gorge circonférentielle (41) de rayonnement, débouchent à une extrémité externe vers la gorge circonférentielle (7), et ont une largeur W2 de gorge inférieure ou égale à 3 mm au moins dans la surface centrale de contact avec le sol.

15. Pneumatique selon la revendication 13 ou 14, caractérisé en ce que les parties (8) d'épaulement ont des gorges (43) d'épaulement qui débouchent à une extrémité interne dans la gorge circonférentielle (7) et à une extrémité externe au bord de la bande de roulement.
